# EUROPÄISCHE PATENTSCHRIFT

(11) **EP 2 387 493 B1**
(45) Veröffentlichungstag und Bekanntmachung des Hinweises auf die Patenterteilung: **28.11.2012**
(21) Anmeldenummer: 10701198.3
(22) Anmeldetag: 13.01.2010
(51) Int. Cl.: B29C 51/16, B29C 55/02, B32B 27/06, B32B 27/18, B32B 27/32, G09F 3/04

(54) **VERWENDUNG EINER ETIKETTENFOLIE FÜR TIEFZIEHVERFAHREN**
USE OF A LABEL FILM FOR DEEP-DRAWING PROCESSES
UTILISATION D'UNE FEUILLE D'ÉTIQUETTES POUR PROCÉDÉ PAR EMBOUTISSAGE PROFOND

(30) Priorität: 15.01.2009 DE 102009005137
(43) Veröffentlichungstag der Anmeldung: 23.11.2011
(73) Patentinhaber: Treofan Germany GmbH & Co.KG, 66539 Neunkirchen (DE)
(72) Erfinder: TEWS, Wilfrid, 6689 Bechhofen (DE); DÜPRE, Yvonne, 67677 Enkenbach-Alsenborn (DE)
(74) Vertreter: Mai, Dörr, Besier
(86) Internationale Anmeldenummer: PCT/EP2010/000134
(87) Internationale Veröffentlichungsnummer: WO 2010/081682

(56) Entgegenhaltungen:
- EP-A1- 0 611 102
- WO-A1-02/45956
- WO-A1-97/30903
- WO-A1-98/32598
- WO-A1-2006/040057
- WO-A1-2009/010178
- US-B2- 6 764 760

## Beschreibung

Die vorliegende Erfindung betrifft die Verwendung einer biaxial orientierten Polypropylenfolie als In-Mould-Etikett beim Tiefziehen.

Etikettenfolien umfassen ein umfangreiches und technisch komplexes Gebiet. Man unterscheidet verschiedene Etikettiertechniken, welche hinsichtlich der Prozeßbedingungen grundverschieden sind und zwangsläufig an die Etikettenmaterialien unterschiedliche technische Anforderungen stellen. Allen Etikettierprozeßen ist gemeinsam, daß als Endergebnis optisch ansprechend etikettierte Behältnisse resultieren müssen, bei denen eine gute Haftung auf dem etikettierten Behältnis gewährleistet sein muß.

Bei den Etikettierverfahren werden sehr verschiedene Techniken zum Applizieren des Etiketts angewendet. Man unterscheidet zwischen Selbstklebeetiketten, Rundumetiketten, Schrumpfetiketten, In-Mould Etiketten, Patch Labelling etc. Die Verwendung einer Folie aus thermoplastischem Kunststoff als Etikett ist in allen diesen verschiedenen Etikettierverfahren möglich.

Auch beim In-Mould Etikettieren wird zwischen verschiedenen Techniken unterschieden, bei denen verschiedene Verfahrensbedingungen angewendet werden. Allen In-Mould Etikettierverfahren ist gemeinsam, daß das Etikett am eigentlichen Formgebungsverfahren des Behälters teilnimmt und währenddessen appliziert wird. Hierbei kommen jedoch sehr verschiedene Formgebungsverfahren zum Einsatz, wie beispielsweise Spritzgußverfahren, Blasformverfahren, Tiefziehverfahren.

Beim Spritzgußverfahren wird ein Etikett in die Spritzgußform eingelegt und von einem schmelzeflüssigen Kunststoff hinterspritzt. Durch die hohen Temperaturen und Drücke verbindet sich das Etikett mit dem Spritzgußteil und wird zum integralen, nicht ablösbaren Bestandteil des Spritzlings. Nach diesem Verfahren werden beispielsweise Becher und Deckel von Eiscreme- oder Margarinebechern hergestellt.

Hierbei werden einzelne Etiketten einem Stapel entnommen oder von einer Rolle zugeschnitten und in die Spritzgußform eingelegt. Die Form ist dabei so gestaltet, daß der Schmelzestrom hinter das Etikett gespritzt wird und die Vorderseite der Folie an der Wandung der Spritzgußform anliegt. Beim Spritzen verbindet sich die heiße Schmelze mit dem Etikett. Nach dem Spritzen öffnet sich das Werkzeug, der Spritzling mit Etikett wird ausgestoßen und kühlt ab. Im Ergebnis muß das Etikett faltenfrei und optisch einwandfrei auf dem Behälter haften.

Beim Spritzen liegt der Einspritzdruck in einem Bereich von 300 bis 600 bar. Die zum Einsatz kommenden Kunststoffe haben einen Schmelzflußindex von um die 40 g/10min. Die Einspritztemperaturen hängen von dem eingesetzten Kunststoff ab. In manchen Fällen wird die Form zusätzlich gekühlt und ein Verkleben des Spritzlings mit der Form zu vermeiden.

Auch beim Blasformen von Behältern oder Hohlkörpern ist eine direkte In-Mould Etikettierung möglich. Bei diesem Verfahren wird ein Schmelzeschlauch durch eine Ringdüse vertikal nach unten extrudiert. Ein vertikal geteiltes Formwerkzeug fährt zusammen und umschließt den Schlauch, der dabei am unteren Ende zugequetscht wird. Am oberen Ende wird ein Blasdorn eingeführt durch den die Öffnung des Formlings ausgebildet wird. Über den Blasdorn wird dem warmen Schmelzeschlauch Luft zugeführt, so daß er sich ausdehnt und sich an die Innenwände des Formwerkzeugs anlegt. Hierbei muß sich das Etikett mit dem zähflüssigen Kunststoff des Schmelzeschlauchs verbinden. Anschließend wird die Form geöffnet und der Überstand an der geformten Öffnung abgeschnitten. Der geformte und etikettierte Behälter wird ausgestoßen und kühlt ab.

Bei diesen Blasformverfahren beträgt der Druck beim Aufblasen des Schmelzeschlauchs ca. 4-15 bar und die Temperaturen sind wesentlich niedriger als beim Spritzgießen. Die Kunststoffmaterialien haben einen niedrigeren MFI als beim Spritzgießen, um einen formstabilen Schmelzeschlauch zu bilden und verhalten sich daher beim Abkühlungsprozeß anders als die niederviskosen Materialien für das Spritzgießen.

Beim Tiefziehen werden unorientierte dicke Kunststoffplatten, meist gegossenes PP oder PS (Polystyrol), in einer Dicke von ca. 200 - 750 µm erwärmt und mittels Vakuum oder Stempelwerkzeugen in ein entsprechendes Formwerkzeug gezogen oder gedrückt. Auch hierbei wird das einzelne Etikett in die Form eingelegt und verbindet sich beim Formprozeß mit dem eigentlichen Behälter. Es kommen erheblich niedrigere Temperaturen zur Anwendung, so daß die Haftung des Etiketts an dem Behälter ein kritischer Faktor sein kann. Die gute Haftung muß auch bei diesen niedrigen Verarbeitungstemperaturen gewährleistet sein. Die Verarbeitungsgeschwindigkeiten dieses Verfahrens sind niedriger als beim Spritzguß.

Grundsätzlich können auch beim Tiefziehen Folien aus thermoplastischen Kunststoffen zur Etikettierung der Behältnisse beim Formen eingesetzt werden. Die Folien müssen hierzu ein ausgewähltes Eigenschaftsprofil aufweisen, um zu gewährleisten, daß sich die Etikettenfolie und der tiefgezogene Formkörper glatt und blasenfrei während des Tiefziehens aneinander schmiegen und sich miteinander verbinden.

Häufig ist die Haftung des Etiketts auf dem Behälter mangelhaft, da beim Tiefziehen vergleichsweise niedrigere Temperaturen und Drücke als bei Spritzguß- oder Blasformverfahren Anwendung finden. Des weiteren treten ähnlich wie beim Blasformen Lufteinschlüsse zwischen Etikett und Behälter auf, welche die Optik des etikettierten Behälters als auch die Haftung beeinträchtigen. Daher sind als Etiketten für Tiefziehanwendungen bisher spezielle Haftschichten oder sehr spezielle Folienstrukturen vorgeschlagen worden.

Eine derartige Folie ist beispielsweise in WO 02/45956 beschrieben. Die Deckschicht dieser Folie weist verbesserte Hafteigenschaften gegenüber verschiedensten Materialien auf. Die Deckschicht enthält als Hauptkomponente ein Co- oder Terpolymeres aus einem Olefin und ungesättigten Carbonsäuren oder deren Estern. Es ist beschrieben, daß auf Grund der verbesserten Haftung diese Folie auch als Etikett beim Tiefziehen eingesetzt werden kann.

WO 2006/040057 beschreibt die Verwendung einer biaxial orientierten Folie mit einer mikroporösen Schicht als Etikett beim Tiefziehen. Die mikroporöse Schicht enthält ein Propylenpolymeres und mindestens ein ß-Nukleierungsmittel. Die Mikroporosität wird durch Umwandlung von ß-kristallinem Polypropylen beim Verstrecken der Folie erzeugt. Die poröse Struktur der Folie vermeidet Lufteinschlüsse. Die Haftung der Folie ist überraschend gut. Daher kann die poröse Folie vorteilhaft beim Tiefziehen eingesetzt werden.

Die WO 98/32598 beschreibt ein In-Mold Etikett, welches mindestens zwei Schichten umfaßt, eine siegelfähige Deckschicht und eine Basisschicht. Die Siegelschicht ist auf der Oberfläche der Basisschicht aufgebracht und enthält ein Polyolefin, mit einer Schmelztemperatur von weniger als 110°C. 25% oder weniger dieses Polyolefins sollen bei einer Temperatur von unter 50°C schmelzen. Es ist nicht explizit erwähnt, daß diese Folie auch bei Tiefziehverfahren eingesetzt werden kann. Die Deckschicht kann aus einer großen Vielzahl von verschiedenen Polymeren ausgewählt werden.

EP 0 889 831 beschreibt ein In-Mold Etikett, welches mindestens zwei Schichten umfaßt. Eine erste Schicht ist eine Heißsiegel-Schicht, welche bei einer Temperatur von 57 bis 100°C aktivierbar sein soll. Die zweite Schicht enthält Vakuolen und ein nichtsphärisches vakuoleninitierendes Teilchen. Die Folie soll eine thermische Leitfähigkeit von weniger als 1,25 * 10-4 kcal/sec cm * °C aufweisen. Als Beispiel für In-Mold Verfahren ist nur das Blasformen erwähnt. Tiefzieh-Anwendungen gehen aus der Schrift nicht explizit hervor. Die Schrift erläutert nicht, was unter der Aktivierungstemperatur zu verstehen ist.

US 6,764,760 beschreibt In-Mold Etiketten aus mehrschichtigen Folien, welche eine Basisschicht, eine Zwischenschicht und eine siegelfähige Deckschicht aufweisen. Als Beispiele für In-Mold Verfahren sind Blasformen, Spritzgießen und Tiefziehen erwähnt. Die siegelfähige Schicht soll zur Vermeidung von Blasen geprägt sein. Die Siegelschicht ist aus Polyethylen mit einem Schmelzpunkt von 50 - 130°C aufgebaut. Gegebenfalls können zusätzlich modifizierte Polymere, wie z.B. EVA oder Acrylat-modifizierte Polymere in der siegelfähigen Deckschicht enthalten sein.

Im Stand der Technik sind verschiedenste Folien beschrieben, welche generell als In-Mold Etiketten eingesetzt werden können. In den offenbarten Lehren wird häufig nicht zwischen den verschiedenen Formgebungsverfahren unterschieden und somit gelehrt, daß die In-Mold Etiketten austauschbar und gleichwertig in den verschiedenen Verfahren eingesetzt werden können. Im Rahmen der vorliegenden Erfindung wurde gefunden, daß dies meistens nicht der Fall ist. Beispielsweise gibt es Folien, die im Spritzguß hervorragend funktionieren, aber beim Blasformen wegen zu vieler Blasen und schlechter Haftung nicht eingesetzt werden können. Folien, die beim Blasformen funktionieren zeigen eine zu geringe Haftung bei den Tiefziehverfahren. Jedes Formgebungsverfahren erfordert im Prinzip eine spezielle Folie, deren Eigenschaften auf die genauen Bedingungen bei der jeweiligen Anwendung optimiert sind. Die Verwendbarkeit einer Folie in einer bestimmten Anwendung erlaubt keine zuverlässigen Rückschlüsse auf die Eignung des Materials in einer anderen Anwendung.

Im allgemeinen geht der Fachmann davon aus, daß die Anwendungen in der Reihenfolge Spritzgießen, Blasformen, Tiefziehen zunehmend kritischer hinsichtlich Blasenbildung und Haftung werden, da die Bedingungen beim Formen des Behälters in dieser Reihenfolge "moderater" werden. Beim Tiefziehen kommen die niedrigsten Temperaturen und die niedrigsten Drücke zur Anwendung, so daß die Anforderungen hinsichtlich Etiketten-Haftung und Blasen-Freiheit von den gängigen In-Mold Etiketten bei Tiefziehanwendungen nicht mehr erfüllt werden. Daher hat sich bis heute in der Praxis die In-Mold Etikettierung beim Tiefziehen nicht durchgesetzt. In der Praxis werden tiefgezogene Behältnisse entweder direkt bedruckt oder mit einem Wrap-Around Etikett versehen.

Die wenigen bekannten Lösungen, die technisch die Anforderungen erfüllen, beinhalten aufwendige Maßnahmen zur Herstellung der Folie und sind daher schlichtweg zu teuer, um Direktdruck oder Wrap-Around Etiketten zu substituieren. Die Acrylat-modifizierten Polymeren gemäß WO 02/45956 haben eine so starke Haftung und Klebrigkeit, daß die Folie bei der Herstellung zu stark zum Verkleben auf den Walzen neigt und durch zu starkes Verblocken auf dem Wickel häufig völlig unbrauchbar wird. Zusätzlich läßt sich die Folie, wenn die Verarbeitung zum Etikettenstapel gelingt, nicht gut entstapeln. Versuche, die Klebkraft durch Abmischungen oder Zusatzstoffe soweit zu reduzieren, daß die Folie bei der Herstellung, Verarbeitung und Anwendung gehandhabt und entstapelt werden kann, beeinträchtigen die Haftkraft derart, so daß die Folie für die Tiefzieh-Anwendung nicht mehr geeignet ist, da die Haftung gegenüber dem Behälter zu gering ist.

Die poröse Folie gemäß WO 2006/040057 kann nur mit extrem langsamen Produktionsgeschwindigkeiten hergestellt werden, da die ß-Kristallite nur durch langsame Abkühlung der extrudierten Schmelze in ausreichender Menge entstehen. Die Folie gemäß US 6,764,760 funktioniert für die Tiefzieh-Anwendung nur mit der vorgeschlagenen Prägung, welche als zusätzliche Verarbeitung die Folie auch verteuert.

Die bekannten Lösungen, die speziell für Tiefziehen entwickelt wurden, beruhen somit entweder auf einer extremen Klebrigkeit der Folien-Oberfläche oder auf extremen Oberflächenrauheiten, bzw. speziellen Oberflächen-Strukturen. Diese rauen Strukturen weisen auf der äußeren Oberfläche vergleichsweise niedrige Glanzwerte auf. Es besteht weiterhin Bedarf eine Folie zur Verfügung zu stellen, die für In-Mold Etikettieren beim Tiefziehen geeignet ist und die Anforderungen hinsichtlich Haftung, Entstapelbarkeit, Blasenfreiheit, Glanz und Integration in den Behälter erfüllt und mit den gängigen kostengünstigen Folienherstellungsprozeßen produziert werden kann.

Zusätzlich ist es wünschenswert ein Etikett zur Verfügung zu stellen, dessen vorteilhafte glänzende Optik auch nach dem Etikettieren erhalten bleibt. Häufig zeigen die Folien vor der Verarbeitung auf ihrer Außenseite den gewünschten Glanz, aber nach dem Etikettierprozeß ist die Struktur der Folie so verändert, daß dieser Glanz verschwunden oder stark beeinträchtigt oder durch den sogenannten Orangenhaut Effekt vollständig zerstört ist. Es ist daher auch Aufgabe der vorliegenden Erfindung ein In-Mold Etikett zur Verfügung zustellen, welches auch nach Applikation auf den Behälter ein optisch glänzendes Erscheinungsbild aufweist, d.h. der Glanz, den die Folie ursprünglich auf ihrer äußeren Oberfläche aufweist, soll nach dem Etikettieren weitgehend erhalten bleiben.

Diese Aufgabe wird gelöst durch die Verwendung einer mehrschichtigen biaxial orientierten Polyolefinfolie mit mindestens fünf Schichten als Etikett beim Tiefziehen, welche aus einer Polypropylen-Basisschicht und einer inneren und einer äußeren Deckschicht und einer inneren und äußeren Zwischenschicht aufgebaut ist, wobei
I die Basisschicht frei von Vakuolen ist und
IIa die äußere Zwischenschicht frei von Vakuolen ist und mindestens 95 Gew.-% Propylenpolymer enthält, welches einen Propylengehalt von 98 bis 100 Gew.-%, bezogen auf das Propylenpolymere, aufweist und
IIIa die äußere Deckschicht bedruckbar ist und
IIb die innere Zwischenschicht im wesentlichen aus Propylenpolymer aufgebaut ist und Vakuolen enthält und
IIIb die innere Deckschicht auf der Oberfläche der inneren Zwischenschicht aufgebracht und eine siegelfähige Deckschicht ist und eine Siegelanspringtemperatur von < 130°C aufweist.

Die Unteransprüche geben bevorzugte Ausführungsformen der Erfindung an.

Unter der Siegelanspringtemperatur II wird diejenige Siegelanspringtemperatur verstanden, die für die innere Deckschicht an der zu verwenden Etikettenfolie gemessen wird. Bei dieser Messung wird innere Deckschicht gegen innere Deckschicht gesiegelt.

Die innere Deckschicht ist im Sinne der vorliegenden Erfindung diejenige Deckschicht, welche beim Etikettieren dem Behältnis zugewandt ist und beim Etikettieren die Verbindung zwischen dem tiefgezogenen Behälter und dem Etikett bildet. Die äußere Deckschicht ist im Sinne der vorliegenden Erfindung diejenige Deckschicht, welche beim Etikettieren dem Behältnis abgewandt ist und die sichtbare Etikettenoberfläche bildet. Die äußere Zwischenschicht ist entsprechend zwischen der äußeren Deckschicht und der Basisschicht angebracht. Die innere Zwischenschicht ist zwischen der inneren Deckschicht und der Basisschicht angebracht. Die Basisschicht bildet die innere zentrale Schicht der Folie.

Überraschenderweise erfüllt die Folie mit der speziellen Struktur nach Anspruch 1 alle vorstehend genannten Anforderungen beim Einsatz als In-mold Etikett im Tiefziehprozeß. Die Folie zeichnet sich durch einen hervorragenden Glanz auf der Außenseite aus, der auch nach dem Etikettierprozeß erhalten bleibt. Die Folie verschwindet optisch in dem etikettierten Behälter als integraler Bestandteil. Somit kann ein etikettierter Behälter mit hohem Glanz im Bereich des Etiketts zur Verfügung gestellt werden. Die Haftung ist ausgezeichnet und es entstehen keine Blasen oder sonstige optische Störstellen, beispielsweise in Form von Orangenhaut. Die Folie läßt sich sowohl bei der Herstellung als auch bei der Verarbeitung, z.B. beim Bedrucken und Zuschneiden und im Etikettierprozeß problemlos verarbeiten, insbesondere ohne Störungen entstapeln.

Im Rahmen der vorliegenden Erfindung wurde gefunden, daß Polypropylen-Folien alle diese vorstehend genannten Anforderungen beim Einsatz als In-mold Etikett im Tiefziehprozeß erfüllen, wenn die siegelfähige innere Deckschicht IIIb auf einer vakuolenhaltigen Zwischenschicht aufgebracht wird. Nach den bekannten Lehren werden Haftung und Blasenfreiheit von In-Mold-Etiketten im wesentlichen von den Eigenschaften und der Oberflächenstruktur der inneren Deckschicht bestimmt. Es war bisher nicht bekannt, daß der Aufbau der angrenzenden Schicht einen signifikanten Einfluß auf die Haftung und anderen Etiketten-Eigenschaften haben kann.

Es ist insbesondere überraschend, daß Folien mit einer vakuolenhaltigen inneren Zwischenschicht auch dann eine gute Haftung zeigen, wenn die Siegelanspringtemperatur II der inneren Deckschicht nicht besonders niedrig ist, wenngleich auch Ausführungsformen mit vakuolenhaltiger innerer Zwischenschicht und niedrig-siegelnder innerer Deckschicht gleichfalls sehr gut verwendet werden können. Die Folien-Struktur mit innerer vakuolenhaltiger Zwischenschicht ermöglicht daher eine wesentlich flexiblere Auswahl der inneren Deckschicht, um das In-Mold Etikett an die jeweiligen Bedingungen bei der Verwendung als In-Mold Etikett anzupassen.

Die innere Deckschicht enthält mindestens ein siegelfähiges Co- oder Terpolymer I aus Propylen, Ethylen und/oder Butylen-Einheiten oder Mischungen aus diesen Co- und Terpolymeren I. Geeignete Co- oder Terpolymere I sind aus Ethylen, Propylen oder Butylen-Einheiten aufgebaut, wobei Terpolymere I drei verschiedene Monomeren enthalten. Die Zusammensetzung der Co- oder Terpolymeren I aus den jeweiligen Monomeren kann innerhalb der nachstehend beschriebenen Grenzen variieren. Im allgemeinen enthalten die Co- und/oder Terpolymeren über 50 Gew.-% Propylen-Einheiten, d.h es sind Propylenco- und/oder Propylenterpolymere mit Ethylen- und/oder Butylen-Einheiten als Comonomere. Copolymere I enthalten im allgemeinen mindestens 60 Gew.-%, vorzugsweise 65 bis 97 Gew.-% Propylen und höchstens 40 Gew.-%, vorzugsweise 3 bis 35 Gew.-% Ethylen oder Butylen als Comonomer. Terpolymere I enthalten im allgemeinen 65 bis 96 Gew.-%, vorzugsweise 72 bis 93 Gew.-% Propylen, und 3 bis 34 Gew.-%, vorzugsweise 5 bis 26 Gew.-% Ethylen und 1 bis 10 Gew.-%, vorzugsweise 2 bis 8 Gew.-% Butylen. Der Schmelzindex der Co- und/oder Terpolymeren beträgt im allgemeinen 0,1 bis 20 g/10min (190°C, 21,6N), vorzugsweise 0,1 bis 15 g/10min. Der Schmelzpunkt kann im allgemeinen in einem Bereich von 70 bis 140°C liegen. Die Schichtdicke der inneren Deckschicht beträgt im allgemeinen 0,5 - 6µm, vorzugsweise 1 bis 3 µm.

Die vorstehend beschriebenen Co- und Terpolymeren, sowie Mischungen daraus können auch über ihre Siegelanspringtemperatur I charakterisiert werden. Unter dieser Siegelanspringtemperatur I des jeweiligen Polymer, bzw. der Mischung wird diejenige Siegelanspringtemperatur verstanden, die an einer Referenzfolie gemessen wird, die eine Polypropylen Basisschicht und eine Deckschicht I von ca. 1,5µm aufweist, wobei diese Deckschicht nur aus dem zu bestimmenden Co - oder Terpolymer oder der zu bestimmenden Mischung besteht und auf der Oberfläche nicht oberflächenbehandelt ist. Bei dieser Messung wird Deckschicht I gegen Deckschicht I gesiegelt. Eine zweite Deckschicht kann optional auf der gegenüberliegenden Seite aufgebracht sein, da diese die Siegelanspringtemperatur I nicht beeinflußt.

Die Siegelanspringtemperatur I der Co- und Terpolymeren kann überraschenderweise in einem breiten Bereich variiert werden, ohne daß die Haftung des Etiketts negativ beeinflußt wird. Im allgemeinen sollte diese Siegelanspringtemperatur I der Co- und Terpolymeren in einem Bereich von 70 - 135°C liegen, d.h. es können sowohl niedrigsiegelnde Co- und Terpolymere I mit einer Siegelanspringtemperatur I von 70 bis 115°C, vorzugsweise 75 - 110°C als auch übliche Co- und Terpolymere I mit einer Siegelanspringtemperatur I von >115 bis 135°C, vorzugsweise 120 - 130°C eingesetzt werden.

Gegebenenfalls können die vorstehend genannten Co- und Terpolymeren untereinander gemischt werden. Hierbei können die Anteile von Co- zu Terpolymer in beliebigen Grenzen variiert werden. Hier gilt in analoger Weise, daß sowohl niedrigsiegelnde Mischungen mit einer Siegelanspringtemperatur I von 70 bis 115°C, vorzugsweise 75 - 110°C als auch höher siegelnde Mischungen mit einer Siegelanspringtemperatur von >115 bis 135°C, vorzugsweise 120 - 130°C eingesetzt werden können.

In einer bevorzugten Ausführungsform der Erfindung ist die innere Deckschicht im wesentlichen aus niedrigsiegelnden Co- und/oder Terpolymer mit einer Siegelanspringtemperatur I von 70 bis 115°C, vorzugsweise 75 - 110°C aufgebaut. Bevorzugt sind hierfür Propylen-Butylen-Copolymere, beispielsweise mit einem Butylengehalt von 10 bis 40 Gew.-%, vorzugsweise 20 bis 35 Gew.-% und einem Schmelzpunkt im Bereich von 100 - 140°C. Im allgemeinen enthält die innere Deckschicht 95 - 100 Gew.-%, vorzugsweise 98 bis <100 Gew.-% Co- und/oder Terpolymer I, bezogen auf das Gewicht der inneren Deckschicht. Für diese Ausführungsformen beträgt die Siegelanspringtemperatur II der inneren Deckschicht 70 - 115°C. Überraschenderweise zeigen diese Ausführungsformen mit niedrigsiegelnder innerer Deckschicht eine vergleichsweise hohe Rauheit Rz auf der inneren Oberfläche der Folie von 3 bis 8µm, vorzugsweise 4 bis 7µm bei einem cut-off von 0,25mm, obgleich die Deckschicht selbst zur Rauheit nicht beiträgt, wie dies bei Deckschicht-Mischungen aus inkomptabilen Polymeren der Fall ist. Die Dicke der inneren Deckschicht für diese Ausführungsformen ist vorzugsweise dünn und beträgt im allgemeinen 0,5 bis 3µm.

Überraschenderweise genügt die indirekt durch die innere vakuolenhaltige Zwischenschicht erzeugte Rauheit aus, um bei einer vergleichsweise sehr niedrigen Siegelanspringtemperatur II die Verarbeitbarkeit der Folie und die Enstapelbarkeit des Etiketts zu gewährleisten. Es wurde erwartet, daß die Deckschicht auf Grund der sehr niedrigen Siegelanspringtemperatur II durch das niedrigsiegelnde Polymere Probleme beim Verarbeiten durch Verklebungen, Verblocken verursacht und sich nicht zuverlässig entstapeln ließe. Diese Probleme treten jedoch überraschenderweise nicht auf.

In einer weiteren vorteilhaften Ausführungsform der Erfindung ist die innere Deckschicht aus einer Mischung des/der Co- und/oder Terpolymer mit einem inkompatiblen Polymeren aufgebaut. Im allgemeinen enthält die innere Deckschicht in diesem Fall mindestens 30 bis 95 Gew.-%, vorzugsweise 45 bis 80 Gew.-%, insbesondere 50 bis 80 Gew.-% des Co- und/oder Terpolymeren I und 5 bis 70 Gew.-%, vorzugsweise 20 bis 55 Gew.-%, insbesondere 20 bis 55 Gew.-% eines inkompatiblen Polymeren, vorzugsweise eines Polyethylens, jeweils bezogen auf das Gewicht der inneren Deckschicht.

Die Abmischung der Co- und/oder Terpolymeren I mit einem unverträglichen Polyethylen erzeugt in an sich bekannter Weise eine Oberflächerauheit, die die Verarbeitbarkeit und die Entstapelbarkeit erleichtern. Überraschenderweise wird diese Rauheit der inneren Oberfläche der Folie durch die vakuolenhaltige Zwischenschicht weiter erhöht. Diese erhöhte Rauheit begünstigt zum Einen die blasenfreie Haftung und zum Anderen die Verarbeitbarkeit, insbesondere Entstapelbarkeit, so daß in dieser Mischung aus inkompatiblen Polymeren auch besonders niedrigsiegelnde Co- oder Terpolymere eingesetzt werden können, ohne daß es zu Problemen beim Verarbeiten durch Verklebungen, Verblocken oder schlechte Entstapelbarkeit kommt.

Für eine niedrigsiegelnde Variante dieser Ausführungsform werden niedrigsiegelnde Co- und/oder Terpolymere I mit einer Siegelanspringtemperatur I von 70 bis 115°C, vorzugsweise 75 - 110°C, mit Polyethylen gemischt. Bevorzugt sind beispielsweise Propylen-Butylen-Copolymere in Abmischung mit MDPE oder HDPE. Vorzugsweise beträgt der Butylengehalt dieser Copolymeren 10 bis 40 Gew.-%, insbesondere 20 bis 35 Gew.-% und deren Schmelzpunkt liegt in einem Bereich von 100 - 140°C. Die jeweiligen Anteile der Co- und/oder Terpolymeren I und Polyethylen in der inneren Deckschicht werden dann so aus den vorstehend angegebenen Bereichen gewählt, daß die Siegelanspringtemperatur II der inneren Deckschicht 110°C nicht überschreitet, vorzugsweise in einem Bereich von 70 - 110°C, insbesondere 80 - 105°C liegt. Diese Ausführungsformen haben im allgemeinen eine Oberflächenrauheit Rz von 6 - 10µm, vorzugsweise 7 - 9µm, bei einem cut-off von 0,25mm. Die Dicke der Deckschicht für diese Ausführungsformen kann in einem breiten Bereich variieren und beträgt im allgemeinen 0,5 bis 6µm, vorzugsweise 1 bis 3µm.

Für eine weitere Variante dieser Ausführungsform mit einer inneren Deckschicht aus Polymer-Mischungen werden Co- und/oder Terpolymere I mit einer Siegelanspringtemperatur I von >115 bis 135°C, vorzugsweise 120 - 130°C, mit Polyethylen gemischt. Die jeweiligen Anteile der Co- und/oder Terpolymeren I und Polyethylen in der inneren Deckschicht werden dann so aus den vorstehend angegebenen Bereichen gewählt, daß die Siegelanspringtemperatur II der inneren Deckschicht über 110°C liegt, vorzugsweise in einem Bereich von 110 - 130°C liegt. Diese Ausführungsformen haben eine überraschend hohe Oberflächenrauheit Rz von 7 - 12µm, vorzugsweise 9 bis 11µm, bei einem cut-off von 0,25mm. Überraschenderweise wird diese Rauheit der inneren Oberfläche der Folie durch die vakuolenhaltige Zwischenschicht weiter erhöht, obgleich die Deckschicht aus inkompatiblen Polymeren bereits eine eigene Rauheit aufweist. Diese hohe Rauheit begünstigt die blasenfreie Haftung und die Verarbeitbarkeit, insbesondere Entstapelbarkeit. Überraschenderweise ist die Haftung dieser Ausführungsform auch ohne niedrigsieglende Co- oder Terpolymere gut. Die Dicke der Deckschicht für diese Ausführungsformen kann ebenfalls in einem breiten Bereich variieren und beträgt im allgemeinen 0,5 bis 6µm, vorzugsweise 1 bis 3µm.

Das inkompatible Polymer der Mischung der inneren Deckschicht ist vorzugsweise ein Polyethylen, welches mit den vorstehend beschriebenen Co- und/oder Terpolymeren I unverträglich ist. Unverträglich bedeutet in diesem Zusammenhang, daß durch die Mischung der Co- und/oder Terpolymeren I mit dem Polyethylen eine Oberflächenrauheit gebildet wird. Geeignete Polyethylene sind beispielsweise HDPE oder MDPE. Das HDPE weist im allgemeinen die nachstehend beschriebenen Eigenschaften auf, beispielsweise einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt im allgemeinen 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140 °C. Geeignetes MDPE hat im allgemeinen einen MFI (50 N/190 °C) von größer 0,1 bis 50 g/10 min, vorzugsweise 0,6 bis 20 g/10min, gemessen nach DIN 53735. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20 °C/min), liegt zwischen 115 und 130°C.

Gegebenenfalls sind bei allen individuellen Ausführungsformen hinsichtlich der Siegelanspringtemperatur II weitere Maßnahmen wie Oberflächenbehandlung, Schichtdicke und Zusatzstoffe so zu wählen, daß der gewünschte Bereich für die jeweilige Siegelanspringtemperatur II erfüllt wird. Im allgemeinen führen Oberflächenbehandlungen zu einer leichten Erhöhung der Siegelanspringtemperatur II, insbesondere bei Corona-Behandlungen. Die Siegelanspringtemperatur II kann sich auch durch Reduzierung der Deckschichtdicke etwas erhöhen, wenn diese im üblichen Bereich zwischen 0,5 - 3µm variiert. Additive haben in der Regel einen weniger ausgeprägten Einfluß auf die Siegelanspringtemperatur II, aber beispielsweise können Antiblockmittel in Abhängigkeit ihrer Teilchengröße Einfluß haben.

Gegebenenfalls kann die innere Deckschicht weitere olefinische Polymere in geringen Mengen enthalten, soweit dadurch die Funktionalität als Tiefziehetikett, insbesondere Haftung, Blasenfreiheit und Entstapelbarkeit nicht gestört wird. Hier kommen Polymere in Frage die beispielsweise über Additiv-Batche in die innere Deckschicht eingearbeitet werden.

Die innere Deckschicht kann zusätzlich übliche Additive wie Neutralisationsmittel, Stabilisatoren, Antistatika, Antiblockmittel und/oder Gleitmittel in jeweils wirksamen Mengen enthalten. Die nachstehenden Angaben in Gew.-% beziehen sich jeweils auf das Gewicht der inneren Deckschicht.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m2/g. Im allgemeinen werden 0,02 bis 0,1 Gew.-% Neutralisationsmittel zugesetzt.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische und phosphitische Stabilisatoren wie Tris-2,6-dimethylphenylphosphit. Phenolische Stabilisatoren mit einer Molmasse von mehr als 500 g/mol werden bevorzugt, insbesondere Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol. Dabei werden phenolische Stabilisatoren allein in einer Menge von 0,1 bis 0,6 Gew.-%, insbesondere 0,1 bis 0,3 Gew.-%, phenolische und phosphitische Stabilisatoren im Verhältnis 1 : 4 bis 2 : 1 und in einer Gesamtmenge von 0,1 bis 0,4 Gew.-%, insbesondere 0,1 bis 0,25 Gew.-% eingesetzt.

Bevorzugte Antistatika sind Glycerinmonostearate, Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit alpha-Hydroxy-(C1-C4)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen oder vernetzte Polymere wie vernetztes Polymethylmethacrylat oder vernetzte Siliconöle. Siliciumdioxid und Calciumcarbonat sind bevorzugt. Die mittlere Teilchengröße liegt zwischen 1 und 6 µm, insbesondere 2 und 5 µm. Die wirksame Menge an Antiblockmittel liegt im Bereich von 0,1 bis 5 Gew.-%, vorzugsweise 0,5 bis 3 Gew.-%, insbesondere 0,8 bis 2 Gew.-%.

Gleitmittel sind höhere aliphatische Säureamide, höhere aliphatische Säureester und Metallseifen sowie Polydimethylsiloxane. Die wirksame Menge an Gleitmittel liegt im Bereich von 0,01 bis 3 Gew.-%, vorzugsweise 0,02 bis 1 Gew.-% bezogen auf die innere Deckschicht. Besonders geeignet ist der Zusatz von 0,01 bis 0,3 Gew.-% aliphatischer Säureamide, wie Erucasäureamid oder 0,02 bis 0,5 Gew.-% von Polydimethylsiloxanen, insbesondere Polydimethylsiloxane mit einer Viskosität von 5 000 bis 1 000 000 mm2/s.

Die vorstehend beschriebene innere Deckschicht ist auf der Vakuolen-haltigen inneren Zwischenschicht IIb aufgebracht. Die Vakuolen-haltige innere Zwischenschicht der Folie enthält mindestens 70 - 98 Gew.-%, vorzugsweise 75 bis 95 Gew.-%, insbesondere 80 bis 92 Gew.-%, jeweils bezogen auf das Gewicht der Zwischenschicht Propylenpolymeren, vorzugsweise Propylenhomopolymere und vakuoleninitierende Füllstoffe. Im allgemeinen enthält das Propylenpolymer der inneren Zwischenschicht mindestens 96 Gew.-%, vorzugsweise 98 bis 100 Gew.-%, Propylen. Der entsprechende Comonomergehalt von höchstens 4 Gew.-% bzw. 0 bis 2 Gew.-% besteht, wenn vorhanden, im allgemeinen aus Ethylen. Die Angaben in Gew.-% beziehen sich jeweils auf das Propylenpolymere.

Bevorzugt sind isotaktische Propylenhomopolymere mit einem Schmelzpunkt von 150 bis 170 °C, vorzugsweise von 155 bis 165°C, und einen Schmelzflußindex (Messung DIN 53 735 bei 21,6 N Belastung und 230 °C) von 1,0 bis 10 g/10 min, vorzugsweise von 1,5 bis 6,5 g/10 min. Der n-heptanlösliche Anteil des Polymeren beträgt im allgemeinen 0,5 bis 10 Gew.-%, vorzugsweise 2 bis 5 Gew.-% bezogen auf das Ausgangspolymere. Die Molekulargewichtsverteilung des Propylenpolymeren kann variieren. Das Verhältnis des Gewichtsmittels Mw zum Zahlenmittel Mn liegt im allgemeinen zwischen 1 und 15, vorzugsweise bei 2 bis 10. In weiteren Ausführungsform kann das isotaktische Polypropylen ein hochisotaktisches Polypropylen mit einer Kettenisotaktizität (13C-NMR) von über 95%, vorzugsweise 96 - 98% sein. Derartige Materialien sind an sich im Stand der Technik bekannt und werden auch als HCPP (high cristallinity Polypropylen) bezeichnet. Gegebenfalls kann ein isotaktisches Polypropylen ausgewählt werden, welches mittels eines Metallocen-Katalysators hergestellt ist. Diese Metallocen-Polypropylene zeichnen sich vorzugsweise durch eine enge Molekulargewichtsverteilung aus (Mw/Mn <2).

Die innere Zwischenschicht enthält vakuoleninitierende Füllstoffe in einer Menge von 2 - 30 Gew.-%, vorzugsweise 5 bis 25 Gew.-%, insbesondere 8 bis 20 Gew.-%, bezogen auf das Gewicht der Zwischenschicht. Zusätzlich zu den vakuoleninitierenden Füllstoffen kann die inneren Zwischenschicht Pigmente, vorzugsweise TiO₂ enthalten, beispielsweise in einer Menge von 0 bis 10 Gew.-%, vorzugsweise 0,5 bis 8 Gew.-%, insbesondere 1 bis 5 Gew.-%. Die Angaben beziehen sich auf das Gewicht der inneren Zwischenschicht.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. "Pigmente" haben im allgemeinen einen mittleren Teilchendurchmesser von 0,01 bis maximal 1 µm, vorzugsweise 0,01 bis 0,7 µm, insbesondere 0,01 bis 0,4 µm. Pigmente umfassen sowohl sogenannte "Weißpigmente", welche die Folien weiß einfärben, als auch "Buntpigmente", welche der Folie eine bunte oder schwarze Farbe verleihen. Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden und/oder aus organischen Verbindungen mit polaren und unpolaren Gruppen eingesetzt. Derartige Beschichtungen des TiO₂ sind im Stand der Technik bekannt.

Im Sinne der vorliegenden Erfindung sind "vakuoleniniziierende Füllstoffe" feste Teilchen die mit der Polymermatrix unverträglich sind und beim Verstrecken der Folien zur Bildung von vakuolenartigen Hohlräumen führen, wobei Größe, Art und Anzahl der Vakuolen von der Größe und der Menge der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle, sofern Unverträglichkeit vorliegt.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE,

Copolymere von cyclischen Olefinen wie Norbornen oder Tetracyclododecen mit Ethylen oder Propylen, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die Dicke der inneren Zwischenschicht liegt im allgemeinen in einem Bereich von 5 bis 30µm, vorzugsweise 8 bis 25µm, insbesondere 12 bis 25µm. Die Dichte der Folie kann je nach Dicke, Zusammensetzung und Vakuolengehalt der inneren Zwischenschicht in einem Bereich von 0,7 bis 0,9g/cm³ variieren. Dabei tragen Vakuolen zu einer Erniedrigung der Dichte bei, wohingegen Pigmente, wie z.B. TiO₂ auf Grund des höheren spezifischen Gewichts die Dichte der Folie erhöhen. Vorzugsweise beträgt die Dichte der Folie 0,75 bis 0,88 g/cm³.

Zusätzlich kann die innere Zwischenschicht die vorstehend für die innere Deckschicht beschriebenen üblichen Additive wie Neutralisationsmittel, Stabilisatoren, Antistatika und/oder Gleitmittel in jeweils wirksamen Mengen enthalten. Die Angaben in Gew.-% beziehen sich dann entsprechend auf das Gewicht der Zwischenschicht.

Die vakuolenfreie Basisschicht der erfindungsgemäßen Folie enthält mindestens 90 bis 100Gew.-%, vorzugsweise 92 bis 99 Gew.-%, jeweils bezogen auf das Gewicht der Basisschicht Propylenpolymeren, vorzugsweise Propylenhomopolymere und 0 bis 10 Gew.-%, vorzugsweise 1 bis 8 Gew.-% Pigment.

Im allgemeinen enthält das Propylenpolymer der vakuolenfreien Basisschicht mindestens 96 Gew.-%, vorzugsweise 98 bis 100 Gew.-%, Propylen. Der entsprechende Comonomergehalt von höchstens 4 Gew.-% bzw. 0 bis 2 Gew.-% besteht, wenn vorhanden, im allgemeinen aus Ethylen. Die Angaben in Gew.-% beziehen sich jeweils auf das Propylenpolymere.

Bevorzugt sind isotaktische Propylenhomopolymere mit einem Schmelzpunkt von 150 bis 170 °C, vorzugsweise von 155 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min. Der n-heptanlösliche Anteil des Polymeren beträgt im allgemeinen 0,5 bis 10 Gew.-%, vorzugsweise 2 bis 5 Gew.-% bezogen auf das Ausgangspolymere. Die Molekulargewichtsverteilung des Propylenpolymeren kann variieren. Das Verhältnis des Gewichtsmittels Mw zum Zahlenmittel Mn liegt im allgemeinen zwischen 1 und 15, vorzugsweise bei 2 bis 10. In weiteren Ausführungsform kann das isotaktische Polypropylen ein hochisotaktisches Polypropylen mit einer Kettenisotaktizität (13C-NMR) von über 95%, vorzugsweise 96 - 98% sein. Derartige Materialien sind an sich im Stand der Technik bekannt und werden auch als HCPP (high cristallinity Polypropylen) bezeichnet. Gegebenfalls kann ein isotaktisches Polypropylen ausgewählt werden, welches mittels eines Metallocen-Katalysators hergestellt ist. Diese Metallocen-Polypropylene zeichnen sich vorzugsweise durch eine enge Molekulargewichtsverteilung aus (Mw/Mn <2).

Die Pigmente in der Basisschicht tragen wesentlich zum Weißgrad und zur Opazität der Folie bei. Im allgemeinen können die vorstehend für die innere Zwischenschicht beschriebenen Pigmente eingesetzt werden, insbesondere Weißpigmente. Es sind somit Ausführungsformen mit einem TiO₂-Gehalt von 5 bis 10 Gew.-% in der Basisschicht besonders bevorzugt.

Zusätzlich zu den Pigmenten kann die Basisschicht die vorstehend für die innere Deckschicht beschriebenen üblichen Additive wie Neutralisationsmittel, Stabilisatoren, Antistatika und/oder Gleitmittel in jeweils wirksamen Mengen enthalten. Die Angaben in Gew.-% beziehen sich dann entsprechend auf das Gewicht der Basisschicht.

Die Dicke der Basisschicht liegt im allgemeinen in einem Bereich von 10 bis 60µm, vorzugsweise 15 bis 50µm.

Die erfindungsgemäße Polyolefinfolie weist eine zweite, äußere Deckschicht IIIa auf der der inneren Deckschicht gegenüberliegenden Seite auf, welche eine gute Haftung gegenüber üblichen Druckfarben, Klebern, sowie Beschichtungen und/oder Lacken zeigt. Zur weiteren Verbesserung der Haftung von Druckfarben, Klebern und Beschichtungen ist es bevorzugt eine Corona-, Plasma- oder Flammbehandlung auf der Oberfläche der äußeren Deckschicht durchzuführen.

Die äußere Deckschicht IIIa ist im allgemeinen aus Polymeren aus Olefinen mit 2 bis 10 Kohlenstoffatomen aufgebaut. Die äußere Deckschicht enthält im allgemeinen 95 bis 100 Gew.-% Polyolefin, vorzugsweise 98 bis <100Gew.-% Polyolefin, jeweils bezogen auf das Gewicht der äußeren Deckschicht.

Beispiele für geeignete olefinische Polymere der äußeren Deckschicht sind Propylenhomopolymere, Co- oder Terpolymere II aus Ethylen-, Propylen- und/oder Butyleneinheiten oder Mischungen aus den genannten Polymeren. Diese Co- oder Terpolymere 11 enthalten keine Carbonsäuremonomeren (bzw. Ester davon). Es sind Polyolefine. Hierunter sind bevorzugte Polymerisate
statistische Ethylen-Propylen-Copolymere mit einem Ethylengehalt von 1 bis 10 Gew.-%, bevorzugt 2,5 bis 8 Gew.-%, oder
statistische Propylen-Butylen-1-Copolymere mit einem Butylengehalt von 2 bis 25 Gew.-%, bevorzugt 4 bis 20 Gew.-%, oder
statistische Ethylen-Propylen-Butylen-1-Terpolymere mit einem Ethylengehalt von 1 bis 10 Gew.-% und einem Butylen-1-Gehalt von 2 bis 20 Gew.-%, oder
eine Mischung oder ein Blend aus Ethylen-Propylen-Butylen-1-Terpolymeren und Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%. Die Angaben in Gew.-% beziehen sich jeweils auf das Gewicht des Polymeren.

Die in der äußeren Deckschicht eingesetzten vorstehend beschriebenen Co- und/oder Terpolymeren II weisen im allgemeinen einen Schmelzflußindex von 1,5 bis 30 g/10 min, vorzugsweise von 3 bis 15 g/10 min, auf. Der Schmelzpunkt liegt im Bereich von 120 bis 145 °C. Das vorstehend beschriebene Blend aus Co- und Terpolymeren II hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen. Gegebenenfalls können alle vorstehend beschriebenen Deckschichtpolymeren peroxidisch oder auch thermooxidativ abgebaut sein, wobei der Abbaufaktor im allgemeinen in einem Bereich von 1 bis 15, vorzugsweise 1 bis 8 liegt.

Gegebenenfalls können der äußeren Deckschicht die vorstehend beschriebenen Additive wie Antistatika, Neutralisationsmittel, Gleitmittel und/oder Stabilisatoren, sowie gegebenenfalls zusätzlich Antiblockmittel zugesetzt werden. Die Angaben in Gew.-% beziehen sich dann entsprechend auf das Gewicht der äußeren Deckschicht.

Geeignete Antiblockmittel sind bereits im Zusammenhang mit der inneren Deckschicht beschrieben. Diese Antiblockmittel sind auch für die äußere Deckschicht geeignet. Die bevorzugte Menge an Antiblockmittel liegt für die äußere Deckschicht im Bereich von 0,1 bis 2 Gew.-%, vorzugsweise 0,1 bis 0,8 Gew.-%.

Die Dicke der äußeren Deckschicht ist im allgemeinen größer als 0,1 µm und liegt vorzugsweise im Bereich von 0,1 bis 5 µm, insbesondere 0,3 bis 2 µm.

In einer besonders bevorzugten Ausführungsform wird die Oberfläche der äußeren Deckschicht Corona-, Plasma- oder Flamm-behandelt. Diese Behandlung verbessert die Hafteigenschaften der Folienoberfläche für eine anschließende Dekoration und Bedruckung, d.h. die Benetzbarkeit mit und Haftung von Druckfarben und sonstigen Dekorationsmitteln zu gewährleisten.

Die erfindungsgemäße Polyolefinfolie weist eine zweite, äußere, vakuolen-freie Zwischenschicht IIa zwischen der äußeren Deckschicht und der vakuolen-freien, pigment-haltigen Basisschicht auf. Das Polymere für die zweite, äußere, vakuolen-freie Zwischenschicht wird aus den für die Basisschicht beschriebenen Propylenpolymeren ausgewählt. Die äußere Zwischenschicht enthält vorzugsweise 98 - 100 Gew.-% Propylenhomopolymer. Die äußere Zwischenschicht/en kann die, für die einzelnen Schichten angegebenen üblichen Additive wie Antistatika, Neutralisationsmittel, Gleitmittel und/oder Stabilisatoren enthalten. Die Dicke dieser äußere Zwischenschicht beträgt 0,5 - 10µm und liegt vorzugsweise im Bereich von 1,0 bis 6 µm, insbesondere 1 bis 4 µm.

Die äußere Zwischenschicht enthält keine vakuoleninitierenden Füllstoffe und vorzugsweise auch keine Pigmente wie beispielsweise TiO₂ und trägt zu einem hohen Glanz auf der Außenseite des opaken Etiketts bei. Es wurde überraschenderweise gefunden, das die erfindungsgemäßen Glanzwerte auf der Außenseite erst durch Kombination dieser äußeren ungefüllten Zwischenschicht, d.h. ohne Pigment und ohne vakuoleninitierende Füllstoffe, und der vakuolenfreien Basisschicht erzielt werden konnten. Die Glanzwerte der erfindungsgemäßen Folie liegen durch diese Struktur im allgemeinen in einem Bereich von 50 bis 90 (20°) vorzugsweise von 55 bis 80.

Für Ausführungsformen bei denen ein weißes Erscheinungsbild (hohe Deckkraft) des Etiketts gewünscht ist, kann die äußere Zwischenschicht gegebenenfalls geringe Menge Pigment, insbesondere TiO₂, beispielsweise in einer Menge von 0,5 bis 5 Gew.-%, enthalten, wenn die Beeinträchtigungen der Glanzwerte in der Endanwendung akzeptabel sind. In diesen Ausführungsformen wird der Anteil Propylenhompolymer entsprechend reduziert. Die Glanzwerte dieser Ausführungsformen mit besonders hohem Weißgrand liegen dann in einem Bereich von 40 bis 80, vorzugsweise 45 bis 70.

Opazität und Weißgrad der erfindungsgemäßen Folie variiert bei den unterschiedlichen Ausführungsformen. Das Erscheinungsbild kann eine transluzente, opake oder weiß-opake Folie sein. Ausführungsformen, die in keiner Schicht zusätzlich TiO₂ enthalten, erscheinen transluzent bis opak, da die Lichtdurchlässigkeit nur durch die Vakuolen der inneren Zwischenschicht reduziert wird. Opazität und Weißgrad wird durch zusätzliches TiO₂ in der Basisschicht und/oder der inneren oder äußeren Zwischenschicht erhöht, so daß diese bevorzugten Varianten opake Folien sind, deren Lichtdurchlässigkeit (ASTM-D 1003-77) höchstens 70 %, vorzugsweise höchstens 50 %, beträgt.

Die erfindungsgemäße Folie ist vorzugsweise eine fünfschichtige Folie mit einem Schichtaufbau äußere Deckschicht/äußere Zwischenschicht/Basisschicht/innere Zwischenschicht/innere Deckschicht. Dieser Schichtaufbau kann gegebenenfalls zusätzlich weitere Schichten aufweisen, die zwischen den jeweiligen Zwischenschichten und der Basisschicht angebracht sein können.

Die Gesamtdicke der erfindungsgemäßen Etikettenfolie kann innerhalb weiter Grenzen variieren und richtet sich nach dem beabsichtigten Einsatz. Sie beträgt vorzugsweise 15 bis 150 µm, insbesondere 20 bis 100 µm, vorzugsweise 25 bis 90 µm. Dabei macht die Basisschicht etwa 40 bis 99 %, vorzugsweise 50 bis 95%, der Gesamtfoliendicke aus.

Die Erfindung betrifft weiterhin ein Verfahren zur Herstellung der erfindungsgemäßen Polyolefinfolie nach dem an sich bekannten Coextrusionsverfahren. Im Rahmen dieses Verfahrens werden die den einzelnen Schichten der Folie entsprechenden Schmelzen gleichzeitig und gemeinsam durch eine Flachdüse coextrudiert, die so erhaltene Folie zur Verfestigung auf einer oder mehreren Walze/n abgezogen, die mehrschichtige Folie anschließend gestreckt (orientiert), die gestreckte Folie thermofixiert und gegebenenfalls an der zur Behandlung vorgesehenen Oberflächenschicht plasma-, corona- oder flammbehandelt.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentieller Streckung.

Zunächst wird wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 70 bis 130 °C, vorzugsweise 80 bis 110°C, zweckmäßigerweise mit Hilfe zweier entsprechend dem angestrebten Streckverhältnis verschieden schnellaufender Walzen durchführen und das Querstrecken vorzugsweise bei einer Temperatur von 120 bis 180 °C mit Hilfe eines entsprechenden Kluppenrahmens. Die Längsstreckverhältnisse liegen im Bereich von 3 bis 8 vorzugsweise 4 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flamm-behandelt. Die Behandlungsintensität liegt im allgemeinen im Bereich von 35 bis 50 mN/m, vorzugsweise 37 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im Wesentlichen unpolaren Polymermatrix entstehen.

Die Oberflächenbehandlung wie z.B. Corona-Behandlung kann sowohl sofort bei der Herstellung der Etikettenfolie wie auch zu einem späteren Zeitpunkt, z.B. unmittelbar vor dem Etikettiervorgang, erfolgen. Im allgemeinen ist die Oberflächenbehandlung auf der Außenseite des Etiketts bevorzugt.

Erfindungsgemäß wird die Etikettenfolie in Tiefzieh-Verfahren für die Etikettierung von Behältern aus Kunststoffen eingesetzt, wobei keine Kleber- oder Haftvermittler, Beschichtungen oder ähnliche Hilfsmittel nach der Folienherstellung in einem separaten Arbeitsschritt auf die innere Oberfläche aufgebracht werden müssen. Des weiteren ist keine Prägung der inneren Oberfläche notwendig.

Die zu etikettierenden Behälter aus thermoplastischem Polymer werden aus Platten (sogenannten Sheets) durch Tiefziehen ausgeformt. Je nach den Anforderungen an den Behälter kommen als thermoplastische Polymere für den Behälter beispielsweise Polypropylen (PP) oder Polyethylen hoher bzw. niedriger Dichte (HD-PE bzw. LD-PE oder LLD-PE), in Einzelfällen auch Mischungen aus diesen Polymeren zum Einsatz. Hinsichtlich der Behälterform bestehen keine Einschränkungen, soweit es sich um Behältnisse handelt die durch den Thermoform-Prozess hergestellt werden können. Hierunter fallen insbesondere auch becher- oder schalenförmige Behältnisse.

Zur Etikettierung der Behälter mit der erfindungsgemäßen Etikettenfolie wird das, im allgemeinen vorher bedruckte Etikett, vor der Formung des Behälters zugeschnitten und gestapelt. Das einzelne Etikett wird dem Stapel entnommen und so in die Form eingelegt, daß die, im allgemeinen bedruckte, Außenseite des Etiketts mit der Form in Kontakt steht und später die Sichtseite des Behälters bildet. Die Innenseite (innere Deckschicht) des Etiketts ist dem Behälter zugewendet. Bei der Formung des Behälters, d.h. beim Tiefziehen verbindet sich die innere Oberfläche des Etiketts unter Einwirkung von Druck und Temperatur mit dem Behälter.

Bei geeigneten Tiefziehverfahren werden dicke Folien aus thermoplastischen Polymeren bei erhöhter Temperatur unter Einwirkung von pneumatischen Kräften oder durch mechanische Einwirkung von Formwerkzeugen plastisch geformt. Die plastische Formung mittels pneumatischer Kräfte kann durch Unterdruck (Tiefziehen) oder Überdruck, d.h. Druckluft erfolgen. Derartige Verfahren sind im Stand der Technik bekannt und werden im englischen Sprachgebrauch als "thermoforming" bezeichnet. Die Verfahren und ihre Ausgestaltung im Einzelnen sind beispielsweise beschrieben in Rosato's Plastics Encyclopedia and Dictionary, Seite 755 bis 766, auf welche hiermit ausdrücklich Bezug genommen wird.

Plastische Formung unter Einwirkung pneumatischer Kräfte erfolgt beispielsweise mittels Unterdruck nach dem üblicherweise die tiefzuziehende Folie mittels eines Oberstempels vorgeformt wurde. Vor dem eigentlichen Tiefziehen wird die Etikettenfolie in die Form eingelegt und die Tiefziehfolie so darüber gelegt, daß der Formkörper luftdicht abgeschlossen wird. An den Formkörper wird in geeignetere Weise ein Unterdruck oder Vakuum angelegt. Aufgrund der Druckdifferenz wirkt ein Sog auf die Tiefziehfolie. Ein Heizelement ist über der Folienoberfläche angebracht und erwärmt die Folie bis sie sich in Richtung des Formkörpers verformt. Temperatur, Unterdruck werden bei dem Prozeß so gewählt, daß sich die Folie an den Formkörper mit dem eingelegten Etikett formschlüssig anlegt und sich dabei mit dem Etikett verbindet. Nach Beseitigen der Druckdifferenz und Abkühlung kann der etikettierte tiefgezogene Behälter entnommen werden.

Zur Charakterisierung der Rohstoffe und der Folien wurden die folgenden Meßmethoden benutzt:

### Schmelzflußindex

Der Schmelzflußindex der Propylenpolymeren wurde nach DIN 53 735 bei 2,16 kg Belastung und 230 °C gemessen und bei 190°C und 2,16 kg für Polyethylene.

### Schmelzpunkte

DSC-Messung, Maxima der Schmelzkurve, Aufheizgeschwindigkeit 20 K/min.

### Dichte

Die Dichte wird nach DIN 53 479, Verfahren A, bestimmt.

### Bestimmung der Siegelanspringtemperatur (SIT)

Es werden zwei Folienstreifen geschnitten und mit den jeweils zu prüfenden Deckschichten aufeinander gelegt. Mit dem Siegelgerät HSG/ETK der Fa. Brugger werden heissgesiegelte Proben (Siegelnaht 20 mm x 100 mm) hergestellt, indem die aufeinandergelegten Streifen bei unterschiedlichen Temperaturen mit Hilfe zweier beheizter Siegelbacken bei einem Siegeldruck von 10 N/cm2 und einer Siegeldauer von 0,5 s gesiegelt werden. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur ist die Temperatur, bei der eine Siegelnahtfestigkeit von mindestens 1,0 N/15 mm erreicht wird.

Für die Bestimmung der Siegelanspringtemperatur 11 der inneren Deckschicht wird innere Deckschicht gegen innere Deckschicht gesiegelt und im übrigen wie vorstehend angegeben verfahren.

Unter der Siegelanspringtemperatur I der Co- und Terpolymeren I wird im Sinne der vorliegenden Erfindung diejenige Siegelanspringtemperatur verstanden, welche an einer biaxial verstreckten Folie aus einer Polypropylen-Basisschicht mit einer ca. 1,5µm dicken Deckschicht aus 100 Gew.-% des jeweiligen Co- oder Terpolymeren oder deren Mischung besteht. Für die Bestimmung dieses Wertes sollte diese Folie nicht oberflächenbehandelt sein, da diese den Wert der Siegelanspringtemperatur I beeinflussen kann. Die Deckschicht sollte darüber hinaus keine üblichen Additive wie Antiblockmittel oder Gleitmittel enthalten, welche die Siegelanspringtemperatur I beeinflussen können. Die Bestimmung sollte mit einer Mindestdicke der Deckschicht durchgeführt werden, bei der der Wert von den üblichen Dickenschwankungen unabhängig ist, im allgemeinen zwischen 1 und 2µm. Die Siegelanspringtemperatur I selbst wird an dieser Referenzfolie wie vorstehend im Einzelnen beschrieben bestimmt.

### Rauheitsmessung

Als Maß für die Rauheit der Innenseiten der Folien wurden die Rauheitswerte Rz der Folien in Anlehnung an DIN 4762 DIN ISO 4287 DIN-ISO 4288 Teil 1 und DIN 4777 sowie DIN 4772 und 4774 mittels eines Perthometer Typ S8P der Firma Feinprüf Perthen GmbH, Göttingen, nach dem Tastschnitt-Verfahren gemessen. Der Meßkopf, ein Einkufentastsystem gemäß DIN 4772, war mit einer Tastspitze mit dem Radius von 5µm und einem Flankenwinkel von 90° bei einer Auflagekraft von 0,8 bis 1,12 mN sowie einer Gleitkufe mit Radius von 25 mm in Gleitrichtung ausgestattet. Der vertikale Meßbereich wurde auf 62,5 µm, die Taststrecke auf 5,6mm und der Cut-off des RC-Filters gemäß DIN 4768/1 auf 0,25 mm eingestellt.

### Glanz

Der Glanz wurde nach DIN 67 530 bestimmt. Gemessen wurde der Reflektorwert als optische Kenngrösse für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Grösse angezeigt. Der Messwert ist dimensionslos und muss mit dem Einstrahlwinkel angegeben werden.

### Opazität und Weißgrad

Die Bestimmung der Opazität und des Weißgrades erfolgt mit Hilfe des elektrischen Remissionsphotometers "ELREPHO" der Firma Zeiss, Oberkochen (DE), Normlichtart C, 2° Normalbeobachter. Die Opazität wird nach DIN 53 146 bestimmt. Der Weißgrad wird als WG = RY + 3RZ - 3RX definiert.

WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

### Dichte

Die Dichte wird nach DIN 53 479, Verfahren A, bestimmt.

Die Erfindung wird nunmehr durch die nachfolgenden Beispiele erläutert.

### Beispiel 1

Nach dem Coextrusionsverfahren wurde aus einer Breitschlitzdüse eine fünfschichtige Vorfolie coextrudiert. Diese Vorfolie wurde auf einer Kühlwalze abgezogen, verfestigt und anschließend in Längs- und Querrichtung orientiert und abschließend fixiert. Die Oberfläche der äußeren Deckschicht wurde mittels Corona zur Erhöhung der Oberflächenspannung vorbehandelt. Die fünfschichtige Folie hatte einen Schichtaufbau äußere Deckschicht/äußere Zwischenschicht/Basisschicht/innere Zwischenschicht/ innere Deckschicht. Die einzelnen Schichten der Folie hatten die folgende Zusammensetzung:
Äußere Deckschicht (1,0 µm):
   100 Gew.-% Ethylen-Propylen-Copolymerisat mit einem Ethylen-Anteil von 4 Gew.-% (bezogen auf das Copolymer) und einem Schmelzpunkt von 135°C; und einem Schmelzflußindex von 7,3g/10 min bei 230 °C und 2,16 kg Belastung (DIN 53 735)
Äußere Zwischenschicht (4µm):
   100 Gew.-% Propylenhomopolymerisat (PP) mit einem n-heptanlöslichen Anteil von 4,5 Gew.-% (bezogen auf 100 % PP), einem Schmelzpunkt von 165°C;
   einem Schmelzflußindex von 3,2 g/10 min bei 230 °C und 2,16 kg Belastung (DIN 53 735)
   Basisschicht (33µm)
   91,6 Gew.-% Propylenhomopolymerisat (PP) mit einem n-heptanlöslichen Anteil von 4,5 Gew.-% (bezogen auf 100 % PP), einem Schmelzpunkt von 165 °C; und einem Schmelzflußindex von 3,2 g/10 min bei 230 °C und 2,16 kg Belastung (DIN 53 735) und
   8,0 Gew.-% TiO₂ mittlerer Teilchendurchmesser von 0,1 bis 0,3 µm
   0,2 Gew.-% tertiäres aliphatische Amin als Antistatikum (Armostat 300)
   0,2 Gew.-% Erucasäureamid als Gleitmittel (ESA)
   Innere Zwischenschicht (18µm)
   85,0 Gew.-% Propylenhomopolymerisat (PP) mit einem n-heptanlöslichen Anteil von 4,5 Gew.-% (bezogen auf 100 % PP), einem Schmelzpunkt von 165 °C; und einem Schmelzflußindex von 3,2 g/10 min bei 230 °C und 2,16 kg Belastung (DIN 53 735)
   15,0 Gew.-% Calciumcarbonat mit einem mittleren Teilchendurchmesser von 3,5 µm
   Innere Deckschicht (1,0µm):
   100 Gew.-% Propylen-Butylen-Copolymerisat mit einem Butylen-Anteil von 30 Mol % (bezogen auf das Copolymer) und einem Schmelzpunkt von 130°C; und einem Schmelzflußindex von 5,0 g/10 min bei 230 °C und 2,16 kg Belastung (DIN 53 735).

Alle Schichten der Folie enthielten zusätzlich Stabilisator und Neutralisationsmittel in üblichen Mengen.

Im einzelnen wurde die folgenden Bedingungen und Temperaturen bei der Herstellung der Folie gewählt wurden:

| | |
|---|---|
| Extrusion: | Extrusionstemperatur ca. 250 °C |
| Abkühlwalze: | Temperatur 25°C, |
| Längsstreckung: | T = 120 °C |
| Längsstreckung um den | Faktor 5 |
| Querstreckung: | T = 150 °C |
| Querstreckung um den | Faktor 8 |
| Fixierung | T = 133°C |

Die Folie wurde auf der Oberfläche der äußeren Deckschicht mittels Corona oberflächenbehandelt. Die Folie hatte eine Dichte von 0,85g/cm³ und eine Dicke von 57 µm.

### Beispiel 2

Es wurde eine Folie nach Beispiel 1 hergestellt. Im Unterschied zu Beispiel 1 enthielt die innere Deckschicht 70 Gew.-% des Propylen-Butylen-Copolymerisat gemäß Beispiel 1 und 30 Gew.-% Polyethylen (MDPE) mit einer Dichte von 0,931 g/cm³ und einem Schmelzflußindex (190°C und 50 N) von 0,8 g/10 min. Die übrige Zusammensetzung und die Verfahrensbedingungen bei der Herstellung der Folie wurden nicht verändert.

### Beispiel 3:

Es wurde eine Folie wie in Beispiel 2 beschrieben hergestellt. Im Unterschied zu Beispiel 2 enthielt die innere Deckschicht 70 Gew.-% Ethylen-Propylen-Copolymerisat mit einem Ethylen-Anteil von 4 Gew.-% (bezogen auf das Copolymer) und einem Schmelzpunkt von 135°C; und einem Schmelzflußindex von 7,3g/10 min bei 230 °C und 2,16 kg Belastung (DIN 53 735) und 30 Gew.-% des gleichen Polyethylens. Die übrige Zusammensetzung und die Verfahrensbedingungen bei der Herstellung der Folie wurden nicht verändert.

### Vergleichsbeispiel 1:

Es wurde eine Folie nach Beispiel 1 hergestellt. Im Unterschied zu Beispiel 1 enthielt die innere Zwischenschicht kein Calciumcarbonat und hatte eine Dicke von 7 µm. Der Anteil an Propylenhomopolymer wurde entsprechend erhöht. Die übrige Zusammensetzung und die Verfahrensbedingungen bei der Herstellung der Folie wurden nicht verändert.

### Vergleichsbeispiel 2:

Es wurde eine Folie nach Beispiel 2 hergestellt. Im Unterschied zu Beispiel 2 enthielt die innere Zwischenschicht kein Calciumcarbonat und hatte eine Dicke von 7 µm. Der Anteil an Propylenhomopolymer wurde entsprechend erhöht. Die übrige Zusammensetzung und die Verfahrensbedingungen bei der Herstellung der Folie wurden nicht verändert.

### Vergleichsbeispiel 3:

Es wurde eine Folie wie in Beispiel 3 beschrieben hergestellt. Im Unterschied zu Beispiel 3 enthielt die innere Zwischenschicht kein Calciumcarbonat und hatte eine Dicke von 7 µm. Der Anteil an Propylenhomopolymer wurde entsprechend erhöht. Die übrige Zusammensetzung und die Verfahrensbedingungen bei der Herstellung der Folie wurden nicht verändert.

### Vergleichsbeispiel 4:

Es wurde eine Folie wie in Beispiel 1 beschrieben hergestellt. Die Zusammensetzung der einzelnen Schichten wurde wie folgt geändert:
Äußere Deckschicht (1,0 µm):
   100 Gew.-% Ethylen-Propylencopolymerisat mit einem Ethylen-Anteil von 4 Gew.-% (bezogen auf das Copolymer) und einem Schmelzpunkt von 135°C; und einem Schmelzflußindex von 7,3g/10 min bei 230 °C und 2,16 kg Belastung (DIN 53 735)
Äußere Zwischenschicht (4µm):
   94 Gew.-% Propylenhomopolymerisat (PP) mit einem n-heptanlöslichen Anteil von 4,5 Gew.-% (bezogen auf 100 % PP) und einem Schmelzpunkt von 165 °C; einem Schmelzflußindex von 3,2 g/10 min bei 230 °C und 2,16 kg Belastung (DIN 53 735) und
   6 Gew.-% Titandioxid, mittlerer Teilchendurchmesser von 0,1 bis 0,3 Basisschicht
   89,6 Gew.-% Propylenhomopolymerisat (PP) mit einem n-heptanlöslichen Anteil von 4,5 Gew.-% (bezogen auf 100 % PP) und einem Schmelzpunkt von 165°C; und einem Schmelzflußindex von 3,2 g/10 min bei 230 °C und 2,16 kg Belastung (DIN 53 735) und
   14 Gew.-% Calciumcarbonat mit einem mittleren Teilchendurchmesser von 3,5 µm 0,2 Gew.-% tertiäres aliphatische Amin als Antistatikum (Armostat 300)
   0,2 Gew.-% Erucasäureamid als Gleitmittel (ESA)
   Innere Zwischenschicht (6 µm)
   100 Gew.-% Propylenhomopolymerisat (PP) mit einem n-heptanlöslichen Anteil von 4,5 Gew.-% (bezogen auf 100 % PP) und einem Schmelzpunkt von 165°C; und einem Schmelzflußindex von 3,2 g/10 min bei 230 °C und 2,16 kg Belastung (DIN 53 735)
Innere Deckschicht (2,5µm):
   70 Gew.-% Propylen-Butylen-Copolymerisat mit einem Butylen-Anteil von 30 Mol.-% (bezogen auf das Copolymer) und einem Schmelzpunkt von 130°C; und einem Schmelzflußindex von 5,0 g/10 min bei 230 °C und 2,16 kg Belastung (DIN 53 735) und
   30 Gew.-% Polyethylen (HDPE) mit einer Dichte von 0,931 g/cm³ und einem Schmelzflußindex (190°C und 50 N) von 0,8 g/10 min.

### Vergleichsbeispiel 5:

Es wurde eine Folie wie in Vergleichsbeispiel 4 hergestellt. Im Unterschied zu Vergleichsbeispiel 4 enthielt die innere Deckschicht 70 Gew.-% Ethylen-Propylen-Copolymerisat mit einem Ethylen-Anteil von 4 Gew.-% (bezogen auf das Copolymer) und einem Schmelzpunkt von 135°C; und einem Schmelzflußindex von 7,3g/10 min bei 230 °C und 2,16 kg Belastung (DIN 53 735) und 30 Gew.-% Polyethylen (HDPE) mit einer Dichte von 0,931 g/cm³ und einem Schmelzflußindex (190°C und 50 N) von 0,8 g/10 min.

| Nr. | SIT II der inneren DS | Rauheit Rmax/Rz der inneren DS | Haftung zum Behälter | Glanz des etikettierten Behälters | Blasenbildung |
|---|---|---|---|---|---|
| Bsp. 1 | 70°C | 5,45/4,12 µm | Sehr gut | Sehr gut | keine |
| Bsp. 2 | 100°C | 7,45/6,15 µm | Sehr gut | Sehr gut | keine |
| Bsp. 3 | 118°C. | 9,66/7,47 µm | gut | Sehr gut | keine |
| VB 1 | 78°C | 0,85/0,66 µm | Sehr gut | Gut | stark |
| VB 2 | 112°C | 5,57/4,55 µm | minimal | --- | --- |
| VB 3 | 120°C | 6,31/4,82 µm | keine | --- | --- |
| VB 4 | 105°C | 4,23/3,28µm | Sehr gut | Orange peel | keine |
| VB 5 | 125 °C | 4,50/3,32 µm | gut | Orange peel | leicht |

### Erfindungsgemäße Verwendung

Die Folien gemäß den Beispielen und den Vergleichsbeispielen wurden als Etikettenfolien beim Tiefziehen eines ovalen Bechers eingesetzt. Hierfür wurden die Etiketten in der passenden Form ausgestanzt, die Zuschnitte gestapelt und in einem Magazin an der Tiefziehanlage bereitgestellt. Die Tiefziehanlage war mit einem Oberstempel als Formungshilfe ausgerüstet. Die Etiketten wurden durch Ansaugung aus dem Magazin entnommen und um einen Hilfskern gewickelt. Das so vorgeformte Etikett wurde mittels Hilfskern in die Form eingelegt, und durch Ansaugung gehalten. Die äußere, bedruckte Deckschicht stand mit der Form in Kontakt. Die innere Deckschicht war dem zu formenden Behälter zugewandt.

Eine 600 µm dicke PP Tiefziehfolie wurde mittels IR Strahler oder Kontaktheizung bis in den Bereich ihrer plastischen Verformbarkeit erwärmt (>165°C). Durch Absenken des Oberstempels und Anlegen eines Vakuums an der Unterseite und Druckluft von der Oberseite wurde die Tiefziehfolie zu einem Becher ausgeformt, wobei sie sich mit dem eingelegten Etikett verbindet.

Die etikettierten Behälter wurden hinsichtlich Haftung und Optik überprüft. Es zeigte sich, das die Folien nach den Vergleichsbeispielen deutliche Blasenbildung zwischen Folie und Behälterwandung aufwiesen oder keine ausreichende Haftung zur Behälterwandung erreicht werden konnte oder der etikettierte Behälter optisch durch Orangenhaut stark beeinträchtigt war.

Die Folien gemäß den Beispielen 1-3 zeigten ein homogenes Aussehen der Etikettenoberfläche ohne Blasenbildung oder andere optische Fehler, sowie eine gute Haftung des Etiketts auf der Behälteroberfläche und einen sehr guten Glanzeindruck des etikettierten Behälters.

## Patentansprüche

1. Verwendung einer mehrschichtigen biaxial orientierten Polyolefinfolie mit mindestens fünf Schichten als Etikett beim Tiefziehen, welche aus einer Polypropylen-Basisschicht und einer inneren und einer äußeren Deckschicht und einer inneren und äußeren Zwischenschicht aufgebaut ist, **dadurch gekennzeichnet, daß**
I die Basisschicht frei von Vakuolen ist und
IIa die äußere Zwischenschicht frei von Vakuolen ist und mindestens 95 Gew.-% Propylenpolymer enthält, welches einen Propylengehalt von 98 bis 100 Gew.-%, bezogen auf das Propylenpolymere, aufweist und
IIIa die äußere Deckschicht bedruckbar ist und
IIb die innere Zwischenschicht im wesentlichen aus Propylenpolymer aufgebaut ist und Vakuolen enthält und
IIIb die innere Deckschicht auf der Oberfläche der inneren Zwischenschicht aufgebracht und eine siegelfähige Deckschicht ist und eine Siegelanspringtemperatur von < 130°C aufweist.

2. Verwendung nach Anspruch 1, **dadurch gekennzeichnet, daß** die innere Deckschicht IIIb 30 bis <100 Gew.-% eines Propylencopolymer und/oder eines Propylen-Terpolymer enthält.

3. Verwendung nach Anspruch 1 oder 2, **dadurch gekennzeichnet, daß** die Basisschicht TiO₂ enthält.

4. Verwendung nach einem der Ansprüche 1 bis 3, **dadurch gekennzeichnet, daß** die äußere Zwischenschicht kein TiO₂ enthält.

5. Verwendung nach einem der Ansprüche 1 bis 4, **dadurch gekennzeichnet, daß** die innere vakuolenhaltige Zwischenschicht eine Dicke von 12 bis 25µm aufweist.

6. Verwendung nach einem der Ansprüche 1 bis 5, **dadurch gekennzeichnet, daß** das die innere Deckschicht IIIb >95 Gew.-% Co- und/oder Terpolymere I aus Propylen, Ethylen und/oder Butylen-Einheiten enthält und die innere Deckschicht eine Siegelanspringtemperatur II von 70 bis 115°C hat.

7. Verwendung nach Anspruch 6, **dadurch gekennzeichnet, daß** die Oberfläche der inneren Deckschicht IIIb, bei einem Cut-off von 0,25mm, eine Rauheit von Rz von 3 bis 8µm aufweist.

8. Verwendung nach einem der Ansprüche 1 bis 5, **dadurch gekennzeichnet, daß** die innere Deckschicht IIIb 40 - 95 Gew.-% Co- und/oder Terpolymeren I aus Propylen, Ethylen und/oder Butylen-Einheiten und 5 bis 60 Gew.-% eines unverträglichen Polymeren enthält, wobei sich die Angaben in Gew.-% jeweils auf das Gewicht der inneren Deckschicht beziehen und die innere Deckschicht eine Siegelanspringtemperatur II von >110 bis <130°C hat.

9. Verwendung nach Anspruch 8, **dadurch gekennzeichnet, daß** die Folie auf der Oberfläche der inneren Deckschicht IIIb, bei einem Cut-off von 0,25mm, eine Rauheit von Rz von 7 bis 12µm, hat.

10. Verwendung nach einem der Ansprüche 1 bis 5, **dadurch gekennzeichnet, daß** die innere Deckschicht IIIb 40 - 95 Gew.-% Co- und/oder Terpolymeren I aus Propylen, Ethylen und/oder Butylen-Einheiten und 5 bis 60 Gew.-% eines unverträglichen Polymeren enthält, wobei sich die Angaben in Gew.-% jeweils auf das Gewicht der inneren Deckschicht beziehen und die innere Deckschicht eine Siegelanspringtemperatur II von 70 bis 110°C hat.

11. Verwendung nach Anspruch 10, **dadurch gekennzeichnet, daß** die Folie auf der Oberfläche der inneren Deckschicht IIIb, bei einem Cut-off von 0,25mm, eine Rauheit von Rz von 6 bis 10µm, hat.

12. Verwendung nach einem der Ansprüche 8 bis 11, **dadurch gekennzeichnet, daß** das unverträgliche Polymere ein Polyethylen, vorzugsweise ein HDPE oder ein MDPE ist.

13. Verwendung nach einem der Ansprüche 6 bis 11, **dadurch gekennzeichnet, daß** das Copolymer I ein Propylen-Butylen-Copolymer mit einem Butylengehalt von 10 bis 40 Gew.-% ist.

14. Verwendung nach einem der Ansprüche 1 bis 13, **dadurch gekennzeichnet, daß** die innere Deckschicht IIIb eine Dicke von 0,5 bis 3µm aufweist

15. Verwendung nach einem der Ansprüche 1 bis 7, **dadurch gekennzeichnet, daß** die Dichte der Folie in einem Bereich 0,7 bis 0,9 g/cm³ liegt.

16. Verwendung nach Anspruch 1, **dadurch gekennzeichnet, daß** die äußere Zwischenschicht 0,5 bis 5 Gew.-% TiO₂ enthält.

17. Verfahren zur Herstellung eines etikettierten Behälters mittels Tiefziehen bei dem ein zugeschnittenes Etikett nach einem der Ansprüche 1 bis 12 in eine Form eingelegt und eine tiefziehbare Dickfolie mittels Heizelemente auf eine Temperatur erwärmt wird, bei der das Polymere thermoplastisch verformbar ist und anschließend die Dickfolie mittels Formwerkzeug oder pneumatisch in eine Form gezogen wird, so daß sich die Dickfolie der Form anpaßt und ein Behälter geformt und gleichzeitig das eingelegte Etikett appliziert wird.

18. Verfahren nach Anspruch 17, **dadurch gekennzeichnet, daß** das Etikett vor der Verwendung auf der äußeren Oberfläche einen Glanz in einem Bereich von 50 bis 90, bei einem Meßwinkel von 20° aufweist und nach Applikation auf dem tiefgezogenen Behälter der Glanz auf der äußeren Oberfläche des applizierten Etiketts 100 bis 90% des ursprünglichen Glanzwertes beträgt.

## Claims

1. Use of a multilayer, biaxially oriented polyolefin film comprising at least five layers as the label in deep drawing, which film is constructed from a polypropylene base layer with one inner and one outer cover layer, and one inner and one outer intermediate layer, **characterized in that**
I the base layer is free from vacuoles, and
IIa the outer intermediate layer is free from vacuoles and contains at least 95% by weight propylene polymer, which polymer has a propylene content of 98 to 100% by weight relative to the propylene polymer, and
IIIa printing may be applied to the outer cover layer, and
IIb the inner intermediate layer is constructed essentially from propylene polymer and contains vacuoles, and
IIIb the inner cover layer is applied to the surface of the inner intermediate layer and is a sealable cover layer, and is a sealable cover layer, and has a sealing initiation temperature <130°C.

2. Use as recited in claim 1, **characterized in that** the inner cover layer IIIb contains 30 to <100% by weight of a propylene copolymer and/or a propylene terpolymer.

3. Use as recited in claims 1 or 2, **characterized in that** the base layer contains TiO₂.

4. Use as recited in any of claims 1 to 3, **characterized in that** the outer intermediate layer contains no TiO₂.

5. Use as recited in any of claims 1 to 4, **characterized in that** the inner, vacuole-containing intermediate layer has a thickness from 12 to 25µm.

6. Use as recited in any of claims 1 to 5, **characterized in that** the inner cover layer IIIb contains >95% by weight co- and/or terpolymers I of propylene, ethylene and/or butylene units and the inner cover layer has a sealing initiation temperature II from 70 to 115°C.

7. Use as recited in claim 6, **characterized in that** the surface of the inner cover layer IIIb has a roughness Rz of 3 to 8µm with a cut-off of 0.25mm.

8. Use as recited in any of claims 1 to 5, **characterized in that** the inner cover layer IIIb contains 40 - 95% by weight co- and/or terpolymers I of propylene, ethylene and/or butylene units and 5 to 60% by weight of an incompatible polymer, wherein the weight percentage figures are relative to the weight of the inner cover layer in each case and the inner cover layer has a sealing initiation temperature II from >110 to <130°C.

9. Use as recited in claim 8, **characterized in that** the film on the surface of the inner cover layer IIIb has a roughness Rz of 7 to 12µm with a cut-off of 0.25mm.

10. Use as recited in any of claims 1 to 5, **characterized in that** the inner cover layer IIIb contains 40 - 95% by weight co- and/or terpolymers I of propylene, ethylene and/or butylene units and 5 to 60% by weight of an incompatible polymer, wherein the weight percentage figures are relative to the weight of the inner cover layer in each case and the inner cover layer has a sealing initiation temperature II from 70 to 110°C.

11. Use as recited in claim 10, **characterized in that** the film on the surface of the inner cover layer IIIb has a roughness Rz of 6 to 10µm with a cut-off of 0.25mm.

12. Use as recited in any of claims 8 to 11, **characterized in that** the incompatible polymer is a polyethylene, preferably an HDPE or an MDPE.

13. Use as recited in any of claims 6 to 11, **characterized in that** the copolymer I is a propylene-butylene copolymer having a butylene content from 10 to 40% by weight.

14. Use as recited in any of claims 1 to 13, **characterized in that** the inner cover layer IIIb has a thickness from 0.5 to 3µm.

15. Use as recited in any of claims 1 to 7, **characterized in that** the density of the film is in a range from 0.7 to 0.9 g/cm³.

16. Use as recited in claim 1, **characterized in that** the outer intermediate layer contains 0.5 to 5% by weight TiO₂.

17. Process for producing a labelled container by deep drawing in which a cut-to-size label as recited in any of claims 1 to 12 is placed in a mould and a thick film that is processable by deep drawing is heated by heater elements to a temperature at which the polymer is thermoplastically deformable and the thick film is subsequently is drawn into a shape pneumatically or with the aid of a moulding tool, so that the thick film conforms to the shape of the mould and a container is moulded and the inserted label is applied at the same time.

18. Process as recited in claim 17, **characterized in that** before it is use used the outer surface of the label has a gloss in a range from 50 to 90 at an angle of incidence of 20°, and after its application to the deep drawn container the gloss on the outer surface of the applied layer retains 100 to 90% of its original gloss value.

## Revendications

1. Utilisation d'un film de polyoléfine multicouche, soumis à une orientation biaxe, comprenant au moins cinq couches, à titre d'étiquette dans le procédé d'emboutissage, qui se compose d'une couche de base en polypropylène et d'une couche de revêtement interne et d'une couche de revêtement externe, ainsi que d'une couche intermédiaire interne et d'une couche intermédiaire externe, **caractérisée en ce que**
I la couche de base est exempte de vacuoles ; et
IIa la couche intermédiaire externe est exempte de vacuoles et contient un polymère de propylène à concurrence d'au moins 95 % en poids, qui présente une teneur en propylène de 98 à 100 % en poids rapportés au polymère de propylène ; et
IIIa la couche de revêtement externe peut être imprimée ; et
IIb la couche intermédiaire interne se compose essentiellement de polymère de propylène et contient des vacuoles ; et
IIIb la couche de revêtement interne est appliquée sur la surface de la couche intermédiaire interne et représente une couche de revêtement scellable qui est présente une température de déclenchement du scellement inférieure à 130 °C.

2. Utilisation selon la revendication 1, **caractérisée en ce que** la couche de revêtement interne IIIb contient un copolymère de propylène et/ou un terpolymère de propylène à concurrence de 30 à une valeur inférieure à 100 % en poids.

3. Utilisation selon la revendication 1 ou 2, **caractérisée en ce que** la couche de base contient du TiO₂.

4. Utilisation selon l'une quelconque des revendications 1 à 3, **caractérisée en ce que** la couche intermédiaire externe ne contient pas de TiO₂.

5. Utilisation selon l'une quelconque des revendications 1 à 4, **caractérisée en ce que** la couche intermédiaire interne contenant des vacuoles présente une épaisseur de 12 à 25 µm.

6. Utilisation selon l'une quelconque des revendications 1 à 5, **caractérisée en ce que** la couche de revêtement interne IIIb contient à concurrence d'une valeur supérieure à 95 % en poids des copolymères et/ou des terpolymères I constitués par des unités de propylène, d'éthylène et/ou de butylène et la couche de revêtement interne, possède une température de déclenchement du scellement II de 70 à 115 °C.

7. Utilisation selon la revendication 6, **caractérisée en ce que** la surface de la couche de revêtement interne IIIb, à un point de coupure de 0,25 mm, présente une rugosité Rz de 3 à 8 µm.

8. Utilisation selon l'une quelconque des revendications 1 à 5, **caractérisée en ce que** la couche de revêtement interne IIIb contient à concurrence de 40 à 95 % en poids des copolymères et/ou des terpolymères I constitués par des unités de propylène, d'éthylène et/ou de butylène et à concurrence de 5 à 60 % en poids, un polymère incompatible, les indications en % en poids se rapportant respectivement au poids de la couche de revêtement interne, et la couche de revêtement interne possède une température de déclenchement du scellement II allant d'une valeur supérieure à 110 jusqu'à une valeur inférieure à 130 °C.

9. Utilisation selon la revendication 8, **caractérisée en ce que** la surface de la couche de revêtement interne IIIb, à un point de coupure de 0,25 mm, présente une rugosité Rz de 7 à 12 µm.

10. Utilisation selon l'une quelconque des revendications 1 à 5, **caractérisée en ce que** la couche de revêtement interne IIIB contient à concurrence de 40 à 95 % en poids des copolymère et/ou des terpolymères I constitués par des unités de propylène, d'éthylène et/ou de butylène et à concurrence de 5 à 60 % en poids, un polymère incompatible, les indications en % en poids se rapportant respectivement au poids de la couche de revêtement interne, et la couche de revêtement interne possède une température de déclenchement du scellement II de 70 à 110 °C.

11. Utilisation selon la revendication 10, **caractérisée en ce que** la surface de la couche de revêtement interne IIIb, à un point de coupure de 0,25 mm, présente une rugosité Rz de 6 à 10 µm.

12. Utilisation selon l'une quelconque des revendications 8 à 11, **caractérisée en ce que** le polymère incompatible représente un polyéthylène, de préférence un HDPE ou un MDPE.

13. Utilisation selon l'une quelconque des revendications 6 à 11, **caractérisée en ce que** le copolymère 1 représente un copolymère de propylène-butylène dont la teneur en butylène s'élève de 10 à 40 % en poids.

14. Utilisation selon l'une quelconque des revendications 1 à 13, **caractérisée en ce que** la couche de revêtement interne IIIB présente une épaisseur de 0,5 à 3 µm.

15. Utilisation selon l'une quelconque des revendications 1 à 7, **caractérisée en ce que** la densité du film se situe dans la plage de 0,7 à 0,9 g/cm³.

16. Utilisation selon la revendication 1, **caractérisée en ce que** la couche intermédiaire externe contient du TiO₂ à concurrence de 0,5 à 5 % en poids.

17. Procédé pour la fabrication d'un récipient étiqueté au moyen d'un emboutissage dans lequel on introduit dans un moule une étiquette découpée selon l'une quelconque des revendications 1 à 12, et on chauffe un film épais apte à être embouti via des moyens d'élément de chauffage à une température à laquelle le polymère subit une déformation thermoplastique et on soumet ensuite le film épais à un étirage au moyen d'un outil de façonnement ou par voie pneumatique dans un moule, de telle sorte que le film épais épouse la configuration du moule et que l'on obtient une récipient, tout en appliquant simultanément l'étiquette insérée.

18. Procédé selon la revendication 17, **caractérisé en ce que** l'étiquette présente, avant son Utilisation sur la surface externe, un brillant dans la plage de 50 à 90, à un angle de mesure de 20°, le brillant, après l'application sur le récipient obtenu par emboutissage, sur la surface externe de l'étiquette appliquée, représentant de 100 à 90 % de la valeur de brillant initiale.
